(19) Europäisches Patentamt
European Patent Office
Office européen des brevets

(11) **EP 4 765 034 A1**

(12) **EUROPEAN PATENT APPLICATION**

(43) Date of publication:
**24.06.2026 Bulletin 2026/26**

(21) Application number: **24275136.0**

(22) Date of filing: **17.12.2024**

(51) International Patent Classification (IPC):
**G06V 10/26** (2022.01)   **G06V 10/82** (2022.01)
**G06V 20/52** (2022.01)   **G06V 20/70** (2022.01)
**G06V 10/80** (2022.01)   **G06V 20/10** (2022.01)

(52) Cooperative Patent Classification (CPC):
**G06V 10/26; G06V 10/809; G06V 10/82;
G06V 20/10; G06V 20/52; G06V 20/70;** G06V 10/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BAE SYSTEMS plc
London SW1Y 5AD (GB)**

(72) Inventor: **The designation of the inventor has not
yet been filed**

(74) Representative: **BAE SYSTEMS plc
Group IP Department
Victory Point
Frimley
Camberley, Surrey GU16 7EX (GB)**

(54) **IMAGE SEGMENTATION**

(57)    There is described a computer implemented method of image segmentation for identifying one or more vehicles in an image comprising a seascape. The method comprises inputting the image into a first neural network trained to perform image segmentation to generate a first segmentation result, inputting the image into a second neural network trained to perform image segmentation on low contrast images to generate a second segmentation result, wherein at least one of the first segmentation result and second segmentation result comprises a segmentation mask corresponding to a vehicle in the input image, and generating an output image in which the one or more vehicles are identified by corresponding segmentation masks by combining the first and second segmentation results. Using two differently trained neural networks allows for accurate segmentation in both foreground and background of the image.

Fig. 2

**Description**

FIELD

The present invention relates to a computer implemented method for image segmentation. In particular, the present invention relates to image segmentation to identify maritime vessels (or other vehicles).

BACKGROUND

There has recently been great success in data driven methods for common vision tasks in maritime environments for detection, identification, semantic segmentation, and classification of large vessels. Small object-high resolution (SO-HR) image segmentation however is proving a difficult task, partly due to data scarcity as well as available images generally having low signal to noise ration (i.e., generally lacking distinguishable features). Other challenges of SO-HR a high false alarm rate due to their visual similarity between distant vessels and water effects.

Despite the challenges, SO-HR is desirable as a route to early warning detection in many applications, and therefore it is now highly desirable to explore alternative techniques for achieving SO-HR.

SUMMARY

Embodiments of the present invention are directed towards solving problems (identified above or otherwise) with small object-high resolution image segmentation. In particular, embodiments of the present invention provide high accuracy segmentation results across all ranges in a maritime scene (i.e., whether an object is in the foreground, and so large, or in the background, and so small, comparatively).

According to an aspect of the present invention, there is provided a computer implemented method of image segmentation for identifying one or more vehicles in an image comprising a seascape (which includes sea, sky, and the horizon line between) - the image preferably captured in the visible light spectrum. The method comprises inputting the image into a first neural network trained to perform image segmentation to generate a first segmentation result, and inputting the image into a second neural network to generate a second segmentation result, the second neural network having been trained for image segmentation of low contrast images (such as infrared). The first neural network may have been trained for image segmentation on a different type of images, such as visible light spectrum images. Notably, the first and second neural networks are trained separately.. Suitably, at least one of the first segmentation result and second segmentation result comprises a segmentation mask corresponding to a vehicle in the input image. Thus, the method concludes with generating an output image in which the one or more vehicles are identified by corresponding segmentation masks, by combining the first and second segmentation results.

In an example, the first neural network is trained to emphasis foreground accuracy (or large object accuracy, vehicles in the foreground obviously appearing larger in the image than vehicles in the background). That is, to generate image segments for vehicles in a foreground of the input image.

In an example, inputting the image to the first neural network may comprise a first downscaling of the input image. Here, it may be desirable to train the first neural network using correspondingly scaled training images (that is, images of the same resolution as the result of the first downscaling). By way of example, a downscaled resolution may be 512x384 pixels, while an initial resolution of the image may be at least one of 1280x720, 1920x1080, 2560x1440, 3840x2160, or 7680x4320 pixels.

In an example, the second neural network is configured to emphasis background accuracy (that is, small vehicle accuracy), which in the context of maritime scenes, are vehicles typically close to the horizon (i.e., far away from the optics capturing the image).

Suitably, the second neural network may be configured to sample patches of the input image based on proximity to a horizon line present in the image. In an example, sampling the patches of the input image is based on a bi-geometric probability distribution centred on the horizon line.

In an example, determining a location of the horizon line in the image may comprise inputting the image to a third neural network. The third neural network may be a pre-trained transformer, and the horizon line may be determined from embeddings taken from a pre-selected interim layer of the transformer (that is, a transformer layer that is not the final output layer). Furthermore, determining the location of the horizon line may comprise performing principal component analysis on the embeddings taken from the pre-selected layer of the third neural network.

In an example, inputting the image to the second neural network may comprise a second downscaling the input image. For example, the second downscaling may be a predetermined multiple of the resolution resulting from the first downscaling, such as a 5 times multiple. Here, a sample patch analysed by the second neural network may have the same resolution as the first downscaled resolution.

In an example, generating the output image may comprise a binary OR-operation between the first and second segmentation results.

In an example, generating the final output image may comprise upscaling the combined first and second image output to the resolution of the second downscaling.

In a related aspect of the present invention, there is provided a computer implemented method of training one or more neural networks outlined above.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

BRIEF DESCRIPTION OF THE FIGURES

Embodiments of the invention will now be described by way of example only with reference to the following figures, in which:

Figure 1 shows an example electronic device;
Figure 2 shows an example method for image segmentation;
Figure 3 shows an example input image;
Figure 4 shows examples of horizon line estimation in an image.

DETAILED DESCRIPTION

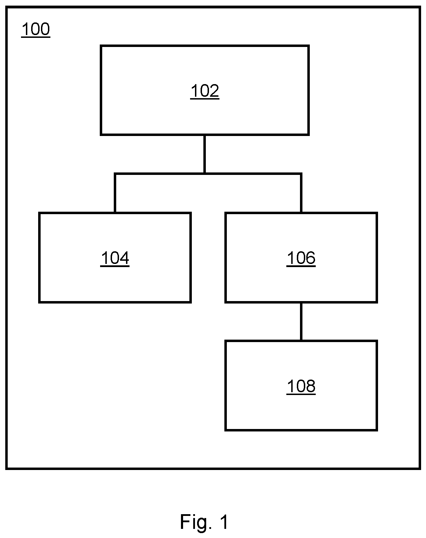

Figure 1 is a block diagram of a computing device 100 configurable to execute embodiments of the invention. The device will normally comprise, or be associated with, at least one processor 102, memory 104 and a communications interface 106. In some embodiments the computing device 100 may comprise, or be otherwise connected to, an image sensor 108.

The at least one processor 102 may comprise one or more of: a microprocessor, a microcontroller and an integrated circuit. The memory 104 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like. The image sensor 108 may be configured to capture images (still or video) of an environment in view of one or more image capturing optics. The image may be captured on an integrated circuit, for example a charge coupled device pixel array or a complementary metal oxide semiconductor pixel array, or similar. Other components and features of the device, such as a housing, power source/supply, display, audio output, user interface, etc, will be well-known to the skilled person and need not be described herein in detail.

In some embodiments the computing device 100 may comprise a constrained-resource device, but which has at least the minimum hardware capabilities required to use a trained neural network/ML model. The device may be: a smartphone, tablet, laptop, computer or computing device, virtual assistant device, a connected camera, etc. The example device may be portable, or integrated into a vehicle such as a marine vessel. It will be understood that this is a non-exhaustive and non-limiting list of example devices.

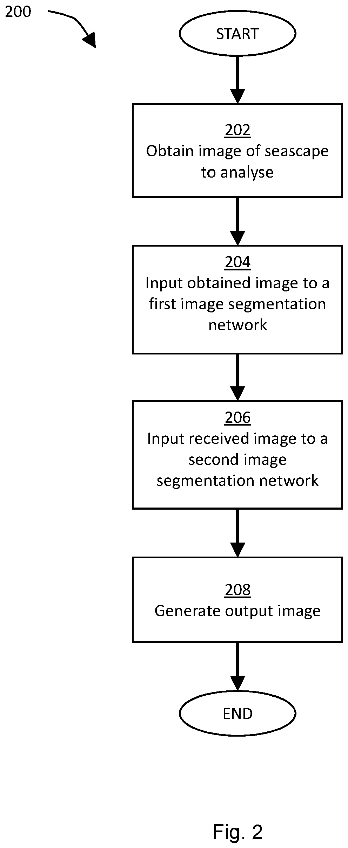

Figure 2 shows an example method of image segmentation that can be performed by means of software instructions being executed by the computing device 100, according to an embodiment. However, in some embodiments, one or more of the steps may be performed by a remote computing device, such as a server or a cloud service, that is in communication with the device 100. It will also be appreciated that some of the steps described herein may be re-ordered or omitted, additional steps may be performed, and although the steps are shown as being performed in sequence, in alternative embodiments some of them may be performed concurrently, possibly on different processors or cores.

It will also be understood that embodiments can be implemented using any suitable software, programming language, data editors, etc, and may be represented/stored/processed using any suitable data structures and formats. The method can be initiated in any suitable manner, such as an application being opened by a user or called by another process. The steps may be executed by a stand-alone application or may be provided as part of a multi-function application.

At least some machine learning models utilised in the method may be configured to perform an image segmentation operation. In an example, the machine learning may be optimised for image segmentation to identify marine vessels in a target image of a seascape (also termed a maritime scene). Herein, a seascape, or maritime scene, may be an image comprising sea and sky separated by a horizon line. The sea and sky may be considered a background of the image, and to form a predominant part of the image. It will also be appreciated that a seascape may comprise other elements that one would expect from a sea environment, such as islands; islands, or parts thereof, may also be taken to be part of the horizon line where they interfere with the sea-sky boundary. Also the seascape may comprise one or more vehicles, such as maritime vessels, aircraft, and the like, as could be expected to be observed from a shoreline, a vessel, and so on. Vessels that may be identifiable by the present techniques include, for example, pleasure vessels, cargo vessels, fishing vessels, and military vessels.

In the following, it is assumed that a training data set to be used to train the machine learning models for their intended purpose is readily available for such use. That is, for example, that suitable images for training machine learning models for image segmentation are available. Suitably, embodiments herein may be considered, if needed, to be prepended with a step of obtaining such training data and training those models. In an example, obtaining training data may comprise downloading the training data from a publicly available repository. In another example, obtaining the training data may comprise generating a bespoke data set using suitable techniques as will be familiar to those in the art. For example, obtaining training data may involve capturing training images using the image sensor 108 as part of the computing device 100.

By way of example, in the present techniques a training dataset comprising 4K resolution images (2160x3840 images) was developed. Each image in the training data comprised at least one labelled vessel. Vessel labelling was achieved by cross referencing with the Automatic indemnification service (AIS) feed and local geography where possible. Due to extreme ranges between image sensor and vessels in some training data, the AIS data was sometimes unavailable or inaccurate about vessel position, and so cross referencing with historic (rather than live) AIS data was sometimes necessary.

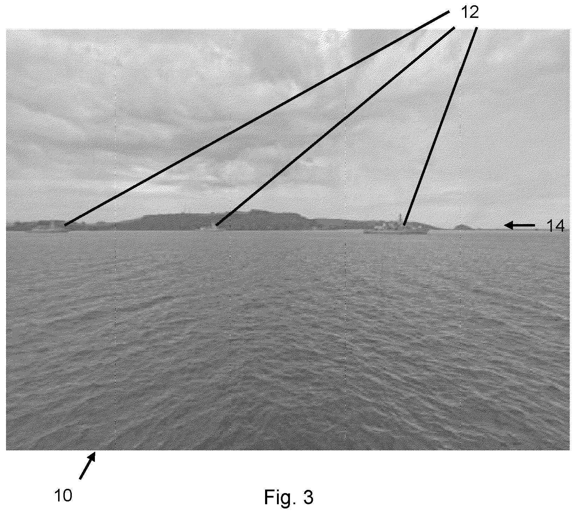

At step 202, the method comprises obtaining an image on which is to be performed image segmentation. An example image 10 is shown in Fig. 3. The image 10 comprises a seascape and one or more vehicles 12 to be identified by suitable image segments / segmentation masks. In an example the image 10 may be stored in the memory 104, and the step of obtaining the image 10 may comprise retrieving the image 10 from the memory 104 by the processor 102. In another example, obtaining the image 10 may comprise controlling the image sensor 108 to capture the image 10 to be stored in the memory 104 for later analysis or analysed substantially straight away in real time. In yet another example obtaining the image 10 may comprise receiving the image 10 through the communications interface 106.

Preferably, the obtained image 10 comprises pixel data corresponding to the visible light spectrum. Or put another way, the image 10 was captured using an image sensor which is configured to capture light in the visible spectrum. Here the visible spectrum is taken to be from about 380 nm to about 700 nm. Furthermore, in the following examples the obtained image 10 is taken to comprise data corresponding to 2160x3840 pixels; that is, the obtained image 10 is a 4K image. Although it will be appreciated that other image resolutions can be used without departing from the inventive concept herein; for example, 720p (1280x720), 1080p (1920x1080), 1440p (2560x1440), or 8K (7680x4320), and widescreen variants thereof.

At step 204, the obtained image 10 is input into a first neural network which has been configured and suitably trained to perform image segmentation. Suitably, the first neural network may output a segmentation result based on the image 10. In the present examples the first neural network is trained for image segmentation using visible light spectrum images. The first neural network may be a general purpose segmentation network. That is, a segmentation network that performs well on ImageNet style benchmarks and that is data set agnostic. Example general purpose networks include UNet/Unet++, DeeplabV3/V3+, and WaSR.

The first neural network is configured to emphasise foreground accuracy of image segments; that is, to identify vehicles in the foreground of the image 10 (although none are shown in the present example). Suitably, the first neural network may be trained on the basis of Focal Loss, as will be familiar to those in the art.

To better focus on foreground accuracy, inputting the image 10 to the first neural network may first comprise a step of downscaling the image 10; that is, a step of reducing a resolution of the image 10 to less than the starting resolution. It should also be noted that downscaling the image 10 does not necessarily require preserving the initial aspect ratio. In the current examples, where the image 10 is initially 4K resolution, it may be downscaled to a resolution of 384x512 (i.e., 2160→384 and 3840→512). In essence, the initial image 10 is blurred so that features relating to smaller vehicles in a background of the image are ignored by the first neural network; that is, small (background) vehicles cannot be identified by the image segmenter. Suitably, the first neural network may be trained for image segmentation on training images having the same resolution as the downscaled input image.

At step 206, the obtained image is input into a second neural network which has been configured and suitably trained to perform image segmentation on low contrast images. Suitably, the second neural network may also output a segmentation result based on the image 10. Here, low contrast images may be include images with minimal highlights and shadows resulting in softer or flatter images. In particular, low contrast includes images captured in non-visible light spectrums. Preferably, the second neural network is trained for image segmentation on infrared spectrum images; that is, images capturing light at wavelengths from about 700 nm to about 1 mm. More specifically, the second neural network may be an attention based local contrast small object segmentation network (ALCL-Net).

Importantly, as will be appreciated from the above discussion, the first neural network and second neural network are trained separately. This approach which avoids overfitting to noise, and segmentation by the first neural network dominating the second neural network (which results in small vehicles being ignored) that can occur if the first and second networks are trained jointly. Also, it will be appreciated that, unlike typical training and usage of a neural network, the second neural network is not input with the exact same type of data that it was trained on (e.g., the second network is trained on infrared images and at inference is provided visible light images); yet low contrast image segmentation networks have been found to be particularly good when used as the second network in the techniques described herein.

Like with the first neural network, inputting the image 10 into the second neural network may also comprise downscaling the input image. To distinguish the downscaling, the downscaling applied to the image input to the first neural network may be taken to be a first downscaling, while downscaling to the image to then be input to the second neural network may be taken to be a second downscaling.

The second downscaling is preferably based on a patch size to be sampled by the second neural network. In particular, the second downscaling may be to a predetermined multiple of the patch size (as long as that still results in a downscale from the initial image resolution). For convenience, the patch size to be sampled may have the same resolution as the resolution which results from the first downscaling. For example, where the first downscaling results in a resolution of 384x512, the patch size utilised by the second neural network may also be 384x512 pixels. If the preset multiple is 5, then the image input to the second neural network may be 1920x2560.

Suitably, the second neural network is configured to emphasis small vehicle accuracy. This may be achieved in part by using a combination of Soft-mloU loss and focal loss for training the ALCL-Net, where

$$SoftIoU(X,Y) = \frac{\sum_{i,j} X_{i,j} \cdot Y_{i,j}}{\sum_{i,j}(X_{i,j} + Y_{i,j} - X_{i,j} \cdot Y_{i,j})} \quad (1)$$

Emphasizing small vehicles is also achieved by sampling patches of the input image 10 based on proximity to a horizon line 14. This is because knowledge of the scene geometry allows for a unique sampling procedure to train faster and with more stability. In particular, given a patch with centre $h, w,$ a patch $P_{h,w}$ is selected according to a predetermined distribution.

In general, any appropriate distribution may be utilised, however in the present examples the sampling is based on a bi-geometric probability distribution centred on the horizon line. In particular, in the present examples a horizontal coordinate of a patch may be given by a uniform distribution, such that the probability is given by

$$p(h = y) = \begin{cases} (1-\theta)^{x-1}\theta & 1 \le x < n \\ (1-\theta)^{n-1} & x = n \\ 0 & x > n \end{cases} \quad (2)$$

This allows for more efficient sampling by giving higher probability to patches more likely to contain smaller vessels (i.e., the patches closer to the horizon line).

Suitably, a means for determining the horizon line is required. In principal, various techniques for this may be utilised, including manual drawing if necessary. In the present techniques, however, a machine learning approach to determining the horizon line it utilised. Suitably, determining the location of the horizon line in the image 10 may comprise inputting the image 10 into a third neural network, which may be a pre-trained transformer model; for example, a DINO pretrained vision transformer model.

Using the transformer model, approximate horizon mappings may be produced by noting that the larger layout in maritime scenes can be represented by low rank approximations very efficiently. That is, horizon mappings may be obtained from the transformer model by taking the output of a suitably selected intermediate layer of the transformer, without needing to process the image through all layers.

Principal component analysis is then performed on the set of embeddings output by the selected transformer layer. The principal components act as a pseudo depth map with the horizon being the border between different principal components. More specifically, the border (i.e., horizon line) may be obtained through Otsu thresholding.

Having performed image segmentation using both the first neural network and second neural network, then at least one of the first segmentation result and second segmentation result will yield a segmentation mask corresponding to a vehicle in the image (assuming there is a vehicle present - there is of course the possibility of a null result if no vehicle is present).

Suitably, at step 208, an output image is generated by combining the first segmentation result and second segmentation result so that what results is an image in which the one or more vehicles 12 are identified by segmentation masks. In particular, the output image may be generated by performing a binary OR operation between the first and second segmentation results. Moreover, where the input image 10 has been downscaled as part of the current techniques, then generating the final output image may further include a step a upscaling the output. In an example, the upscaling may scale the output image to the original image resolution (e.g., 4K). In another example, the upscaling may scale the output image to the resolution of the second downscaling (i.e., greater than the resolution resulting from the first downscaling, but less than the original image resolution). Although it will be appreciated that in principle any resolution could be specified.

To compare the efficacy of the presently described technique, the presently described horizon sampling approach is compared to existing high resolution frameworks and ablation students. Due to the size of smaller vessels heavily negatively impacting commonly used accuracy metrics, such as intersection over union (IoU), it was decided to additionally include the probability of detection ($Pd = N_{pos}/N_{total}$). All training was on NVIDIA hardware A100 GPUs with a batch size of 25 for both branches of the network in first stage of training. The optimizers used is the Adam optimizer with a learning rate of 1e - 4.

Existing methods that best represented the groups of techniques for high resolution segmentation include ICNet, ESPNet, LearnToZoom, GlobalLocal Collaborative, TwoPlanePerspective, SegFormer, All of these methods were trained using the original implementation unless stated otherwise. The results are presented in table 1, along with those for the present techniques (ALCLNet and its variations).

Table 1

| Techniques | IoU | Pd |
|---|---|---|
| ICNet (Resnet101) | 0.002 | 0.042 |
| ESPNet | 0.005 | 0.075 |
| LearnToZoom | 0.001 | 0.058 |
| GlobalLocal Collaborative (Resnet101) | 0.039 | 0.04 |
| GlobalLocal Collaborative (UNet++) | 0.003 | 0.008 |
| TwoPlanePerspective | 0.001 | 0.052 |
| Segformer | 0.001 | 0.080 |
| ALCLNet | 0.378 | 0.771 |
| HC-ALCLNet (w/out Sampling) | 0.450 | 0.792 |
| HC-ALCLNet | 0.505 | 0.814 |

The key observations are that performances are generally poor on HR-CAW. Surprisingly, despite seeming the most appropriate for the domain, the TwoPlanePerspective method yielded poor results. This is attributed to the inability to properly handle the different sets of features used by distant targets and those in the foreground and, despite accommodations, the lack of a stable reward signal due to object size. The highest performances recorded are those patchifying techniques as we hypothesize that this reduces the over-fitting to noise, however due to the weight-sharing of the networks is ill-suited towards the domain. Generally techniques that rely on an initial step which that utilizes a global prior for saliency prediction struggles to deal with the differing ranges presented and numbers of vessels presented. This can especially be seen in LearnToZoom which, due to pixel limit, can only allocate a set number of pixels towards distant objects however often pixels are allocated to foreground objects.

Further experiments were conducted in integrating approximate depth maps into internal features akin to et al WaSR IMU adaptation module. It was found that this improves performance in global branch insubstantially (+0.02 MIoU).

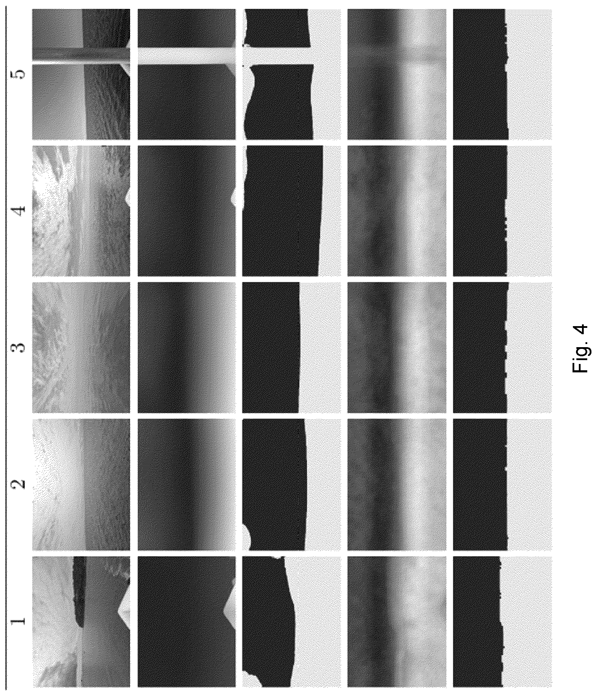

To measure the appropriateness of the assumption of clustering experiments can be run using different datasets. However, since there is no horizon ground truth available, we compare the accuracy of the horizon estimation method by comparing with the MiDas zero shot depth estimation and applying Otsu automatic thresholding. The horizon approximations are obtained using principle components analysis with random sets of size 200 images in the training set. This the sets were sampled 5 times and results were averaged over all runs. The Jaccard index is then measured between the horizon estimation and the depth estimation. We test the accuracy between layers of the DiNO model at interval of 2 layers using 4 and 5 components. The results of this can be seen in table 2. Qualitative results can be seen in Figure 4, which show a comparison of unsupervised depth approximation (row 4) against zero shot depth estimation (row 2) alongside corresponding horizon estimations (rows 3 and 5).

Table 2

| Layer | Number of components | MIoU |
|---|---|---|
| 2 | 4 | 0.54 |
| 4 | 4 | 0.95 |
| 6 | 4 | 0.95 |
| 8 | 4 | 0.94 |
| 10 | 4 | 0.9 |
| 2 | 5 | 0.51 |
| 4 | 5 | 0.95 |
| 6 | 5 | 0.90 |
| 8 | 5 | 0.94 |
| 10 | 5 | 0.9 |

In summary, the above has described a new technique for high resolution vessel segmentation in addition to achieving state of the art performance in high resolution vessel segmentation. The results show that the suggested framework outperforms existing methods.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1.  A computer implemented method of image segmentation for identifying one or more vehicles in an image comprising a seascape, the method comprising:

    inputting the image into a first neural network trained to perform image segmentation to generate a first segmentation result,
    inputting the image into a second neural network trained to perform image segmentation on low contrast images to generate a second segmentation result,
    wherein at least one of the first segmentation result and second segmentation result comprises a segmentation mask corresponding to a vehicle in the input image, and
    generating an output image in which the one or more vehicles are identified by corresponding segmentation masks by combining the first and second segmentation results.

2.  The method of claim 1, wherein the image comprising the seascape is an image captured in the visible light spectrum.

3.  The method of claim 1 or 2, wherein the first neural network is trained on visible light spectrum images.

4.  The method of any preceding claim, wherein the first neural network is trained to generate image segments for vehicles in a foreground of the input image.

5.  The method of claim 4, wherein inputting the image to the first neural network comprises a first downscaling of the input image.

6.  The method of any preceding claim, wherein the second neural network is trained for image segmentation on infrared images.

7.  The method of any preceding claim, wherein the second neural network is configured to sample patches of the input image based on proximity to a horizon line present in the image.

8. The method of claim 7 when also dependent on claim 5, wherein a sample patch analysed by the second neural network has the same resolution as the first downscaled resolution.

9. The method of claim 7 or 8, wherein sampling the patches of the input image is based on a bi-geometric probability distribution centred on the horizon line.

10. The method of any of claims 7 to 9, wherein determining a location of the horizon line in the image comprises inputting the image to a third neural network.

11. The method of claim 10, wherein the third neural network comprises a pre-trained transformer, and the horizon line is determined from embeddings taken from a pre-selected interim layer of the transformer.

12. The method of any preceding claim, wherein inputting the image to the second neural network comprises a second downscaling the input image.

13. The method of claim 12 when also dependent on claim 5, wherein the second downscaling is a predetermined multiple of the resolution resulting from the first downscaling.

14. The method of any preceding claim, wherein generating the output image comprises a binary OR-operation between the first and second segmentation results.

15. The method of any preceding claim, wherein generating the final output image comprises upscaling the combined first and second image output to the resolution of the second downscaling.

Fig. 1

200

START

202
Obtain image of seascape
to analyse

204
Input obtained image to a
first image segmentation
network

206
Input received image to a
second image
segmentation network

208
Generate output image

END

Fig. 2

Fig. 3

Fig. 4

Europäisches
Patentamt

European
Patent Office

Office européen
des brevets

# EUROPEAN SEARCH REPORT

**Application Number**

EP 24 27 5136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/237662 A1 (WANG PENG [US] ET AL) 27 July 2023 (2023-07-27) | 1-5, 12-15 | INV. G06V10/26 |
| Y | * paragraph [0020]; figure 1 * | 6 | G06V10/82 |
| A | * paragraph [0021] * | 7-11 | G06V20/52 |
| | * paragraph [0022] - paragraph [0023] * | | G06V20/70 |
| | * paragraph [0046] - paragraph [0048] * | | G06V10/80 |
| | * paragraph [0039] * | | G06V20/10 |
| | * figures 1,2,3 * | | |
| | * paragraph [0059] * | | |
| | ----- | | |
| Y | FU JIAN ET AL: "Real-Time Infrared Horizon Detection in Maritime and Land Environments Based on Hyper-Laplace Filter and Convolutional Neural Network", IEEE TRANSACTIONS ON INSTRUMENTATION AND MEASUREMENT, vol. 72, 1 January 2023 (2023-01-01), pages 1-13, XP093252305, USA ISSN: 0018-9456, DOI: 10.1109/TIM.2023.3282656 * Section III. Method; page 4 * * Section IV.E Comparison and Analysis; page 9 * | 6 | |
| | ----- | | TECHNICAL FIELDS SEARCHED (IPC) |
| | | | G06V |
| A | QIAO DALEI ET AL: "Marine Vision-Based Situational Awareness Using Discriminative Deep Learning: A Survey", JOURNAL OF MARINE SCIENCE AND ENGINEERING, vol. 9, no. 4, 8 April 2021 (2021-04-08), pages 1-18, XP055929236, DOI: 10.3390/jmse9040397 * the whole document * | 1-15 | |
| | ----- | | |
| | -/-- | | |

The present search report has been drawn up for all claims

| Place of search | Date of completion of the search | Examiner |
|---|---|---|
| The Hague | 25 February 2025 | Gissot, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 27 5136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FINLINSON ALASTAIR A FINLINSON@SURREY AC UK ET AL: "Semantic Segmentation for Multi-Contour Estimation in Maritime Scenes", PROCEEDINGS OF THE 23RD INTERNATIONAL MIDDLEWARE CONFERENCE: TUTORIALS, ACMPUB27, NEW YORK, NY, USA, 1 December 2022 (2022-12-01), pages 1-10, XP058972519, DOI: 10.1145/3565516.3565521 ISBN: 978-1-4503-9948-7 * the whole document * ----- | 1-15 | |
| A | JI JIAN ET AL: "Parallel Fully Convolutional Network for Semantic Segmentation", IEEE ACCESS, [Online] vol. 9, 1 January 2021 (2021-01-01), pages 673-682, XP093252146, USA ISSN: 2169-3536, DOI: 10.1109/ACCESS.2020.3042254 Retrieved from the Internet: URL:https://ieeexplore.ieee.org/ielx7/6287 639/9312710/09310681.pdf?tp=&arnumber=9310 681&isnumber=9312710&ref=aHR0cHM6Ly93d3cuZ 29vZ2xlLmNvbS8=> [retrieved on 2025-02-19] * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 25 February 2025 | Gissot, Samuel |

EPO FORM 1503 03.82 (P04C01)

## ANNEX TO THE EUROPEAN SEARCH REPORT
## ON EUROPEAN PATENT APPLICATION NO.

EP 24 27 5136

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | Publication date | Patent family member(s) | Publication date |
|---|---|---|---|
| US 2023237662 A1 | 27-07-2023 | CN 118591828 A<br>US 2023237662 A1<br>WO 2023146470 A2 | 03-09-2024<br>27-07-2023<br>03-08-2023 |

EPO FORM P0459

For more details about this annex : see Official Journal of the European Patent Office, No. 12/82